# FASCICULE DE BREVET EUROPEEN

(11) **EP 3 402 585 B1**
(45) Date de publication et mention de la délivrance du brevet: **03.06.2020**
(21) Numéro de dépôt: 16826386.1
(22) Date de dépôt: 15.12.2016
(51) Int. Cl.: B01D 53/047, C01B 3/56

(54) **PSA H2 AVEC MODIFICATION DU FLUX GAZEUX D'ALIMENTATION**
H2 PSA MIT MODIFIKATION DES SPEISEGASSTROMS
H2 PSA WITH MODIFICATION OF THE FEED GAS FLOW

(30) Priorité: 13.01.2016 FR 1650261
(43) Date de publication de la demande: 21.11.2018
(73) Titulaire: L'Air Liquide Société Anonyme pour l'Etude et l'Exploitation des Procédés Georges Claude, 75007 Paris (FR)
(72) Inventeur: TOULEMONDE, Louis, 59500 Douai (FR); MONEREAU, Christian, 34000 Montpellier (FR)
(74) Mandataire: Laigneau, Amandine
(86) Numéro de dépôt international: PCT/FR2016/053467
(87) Numéro de publication internationale: WO 2017/121933

(56) Documents cités:
- FR-A1- 2 836 060
- US-A- 4 836 833
- US-A1- 2009 259 323
- US-A1- 2014 010 753
- US-B1- 6 315 818

## Description

La présente invention concerne un procédé de séparation par adsorption à modulation de pression (PSA).

Bien que pouvant être de portée générale, la présente invention se limite ici à la production d'hydrogène, et plus précisément à la production d'hydrogène de haute pureté, c'est-à-dire à une pureté H2 supérieure ou égale à 99.9% mole.

De façon générale, une unité PSA se compose de plusieurs adsorbeurs fonctionnant de manière décalée dans le temps, chaque adsorbeur étant soumis à un même cycle de fonctionnement. Le décalage entre chaque adsorbeur est appelé temps de phase, et est égal au temps de cycle divisé par le nombre d'adsorbeur.

Au cours du cycle de fonctionnement, chaque adsorbeur alterne globalement entre étape d'adsorption à sensiblement haute pression et étapes de régénération à sensiblement basse pression.

Durant l'étape d'adsorption à sensiblement haute pression, les constituants les plus adsorbables présents dans le gaz de charge se fixent préférentiellement sur les adsorbants, laissant passer les composants les moins adsorbables. En tête d'adsorbeur, on obtient ainsi un premier produit relativement pur en constituants à faible capacité d'adsorption.

Durant les étapes de régénération à sensiblement basse pression, les constituants précédemment adsorbés sont libérés et entrainés vers le fond de l'adsorbeur, c'est-à-dire côté entrée du gaz à traiter. Cet entrainement est généralement réalisé à l'aide d'une étape de dépressurisation à contre-courant (en sens inverse de celui du gaz à traiter pendant l'adsorption) et/ou d'une étape d'élution par un gaz riche en constituants à faible capacité d'adsorption, elle-même effectuée à contre-courant. En fond d'adsorbeur, on obtient ainsi un deuxième produit relativement riche en constituants à forte capacité d'adsorption.

A titre d'exemple, nous pouvons citer le document US 4 836 833 qui divulgue un procédé de production d'un flux gazeux présentant une concentration en hydrogène égale ou supérieure à 99,9% au moyen d'une unité d'adsorption à modulation de pression à partir d'un flux gazeux principal comprenant au moins 70% mode d'hydrogène.

Il convient ici de noter que, lorsqu'on parle d'adsorbabilité ou de capacité d'adsorption d'un constituant, c'est toujours par rapport à un adsorbant donné. Ainsi en fonction des constituants que l'on souhaite séparer, on pourra être amené à faire des choix d'adsorbants différents. Prenons l'exemple d'une unité PSA qui produit de l'hydrogène très haute pureté à partir d'un gaz de synthèse, lui-même déjà riche en hydrogène, mais dont on souhaite extraire certaines impuretés en quantité trop importante comme le N2, le CO, le CH4 et le CO2. Afin d'arrêter préférentiellement le CO2, on installe un lit de charbon actif en entrée de l'adsorbeur, qu'on recouvre d'un lit de tamis moléculaire afin d'arrêter le CO et le N2, ces deux derniers constituants s'adsorbant peu sur le charbon actif. Le CH4, quand à lui, est adsorbé à la fois sur le charbon actif et sur le tamis moléculaire. En tête d'adsorbeur, on est ainsi en mesure d'obtenir un gaz riche en hydrogène dont les teneurs peuvent aller jusqu'à plus de 99.999%. En pied d'adsorbeur, on sort le résiduaire qui contient la quasi-totalité des impuretés (CO2, CH4, CO, N2...) et l' H2 qui n'est pas récupéré et donc perdu pour la production.

Un PSA est généralement caractérisé par trois critères de performances: la pureté du produit de tête ou du produit de queue, le rendement en constituants les plus ou les moins adsorbables selon l'application envisagée, et la productivité. La productivité correspond à la quantité de gaz de charge qu'un adsorbeur est capable de traiter par unité de volume d'adsorbants dans les conditions retenues. A débit de gaz de charge fixé, le volume d'adsorbants à installer par adsorbeur est donc directement lié à la productivité, ainsi qu'au temps de phase. En pratique, la pureté du produit de tête ou du produit de queue est généralement fixée, et on cherche généralement à optimiser le couple de performance: rendement et productivité.

Ceci est particulièrement vrai dans le cas de la production d'hydrogène dont la pureté est fixée par les procédés utilisateurs aval ou par la pureté du réseau dans lequel il est introduit.

On a vu que, dans une unité PSA, les adsorbants sont choisis afin de fixer préférentiellement les constituants les plus adsorbables, qui se retrouveront dans le « produit de pied », à basse pression, par rapport aux constituants peu adsorbables, qui formeront le « produit de tête » à haute pression. Toutefois une certaine quantité de constituants peu adsorbables est inévitablement adsorbée en même temps que les constituants les plus adsorbables lors des étapes d'adsorption à haute pression. On parle alors de phénomène de co-adsorption, c'est-à-dire qu'un adsorbant ne présente généralement pas une sélectivité infinie vis-à-vis d'un constituant mais va bloquer simultanément plusieurs d'entre eux dans des proportions différentes. On trouve également des gaz peu adsorbables dans les volumes libres que constituent les volumes morts en pied et en tête d'adsorbeur, les espaces libres inter ou intra granulaires.

Sans "précautions " particulières, ces quantités de constituants peu adsorbables présentes dans les volumes morts et les lits d'adsorbants en début d'étapes de régénération seraient pour la plupart perdues dans le produit de queue à cause de leur faible capacité d'adsorption. Cela aurait pour effet de diminuer le rendement en constituants peu adsorbables du produit de tête.

Dans l'état de l'art, afin de minimiser les pertes en rendement dues à la présence excessive de constituants peu adsorbables dans les adsorbeurs en début d'étapes de régénération, de nombreuses étapes de dépressurisation à co-courant sont ajoutées au cycle de fonctionnement du PSA.

Ces étapes sont généralement insérées entre l'étape d'adsorption à haute pression et les étapes de dépressurisation à contre-courant et/ou l'étape d'élution à basse pression. Elles permettent d'extraire de l'adsorbeur un gaz relativement riche en constituants peu adsorbables, qui est ensuite valorisé à un autre moment du cycle de fonctionnement. De cette façon on tend à diminuer la quantité de constituants peu adsorbables perdu dans le résiduaire.

On trouve principalement deux types d'étapes de dépressurisation à co-courant qui permettent de récupérer ou d'utiliser à bon escient les constituants les moins adsorbables: l'étape d'équilibrage et l'étape d'alimentation-élution.

Pour l'étape d'équilibrage, le gaz extrait lors de la dépressurisation à co-courant, relativement riche en constituants peu adsorbables alimente une étape de repressurisation à contre-courant situé en aval des étapes de régénération proprement dites (décompression co-courant, élution), jusqu'à ce qu'il y ait équilibrage complet ou partiel des pressions entre les deux adsorbeurs. Au cours de cette étape, il n'y a donc pas de perte en constituants peu adsorbables en dehors de l'unité mais un transfert d'un adsorbeur à un autre. Un cycle PSA classique contient généralement une à plusieurs étapes d'équilibrage afin de maximiser les quantités en constituants valorisables que l'on souhaite récupérer.

Si initialement les premiers PSA H2 comprenaient une seule étape d'équilibrage, qui permettait déjà de récupérer globalement de 70 à 75% de l'hydrogène contenu dans leur alimentation, les gros PSA actuels, c'est-à-dire produisant au moins 50 000 Nm3/h de H2, comprennent 3 ou 4 équilibrages et permettent d'obtenir des rendements d'extraction proche de 90%.

Pour l'étape d'alimentation-élution, le gaz extrait, lui aussi relativement riche en constituants peu adsorbables, alimente une/plusieurs étapes d'élution à basse pression. De cette façon, on valorise les constituants peu adsorbables en les utilisant pour la régénération des lits d'adsorbants. En pratique, ils facilitent la désorption des impuretés en baissant leur pression partielle dans le gaz en circulation. Notons que dans ce cas, il y a tout de même perte d'une partie des constituants peu adsorbables dans le produit de queue mais cette façon de faire évite de devoir utiliser du gaz de production et participe donc à l'obtention d'un rendement élevé.

Cette évolution vers un cycle possédant de plus en plus d'étapes d'équilibrage a cependant ses limites à la fois en termes d'investissement supplémentaire et en efficacité.

Plus d'équilibrages signifie d'abord plus d'équipements supplémentaires à installer. Par exemple, pour passer d'un cycle à deux étapes d'équilibrage à un cycle à quatre étapes d'équilibrage, à temps d'adsorption et à temps de purge identiques, on remarque qu'il est généralement nécessaire d'installer deux adsorbeurs supplémentaires, ainsi qu'un collecteur de gaz d'équilibrage dédié aux deux nouvelles étapes d'équilibrages, plus toutes les vannes associées. Cela a pour conséquence d'augmenter déjà sensiblement le coût d'investissement du PSA. Mais l'effet principal associé à l'augmentation du nombre d'équilibrage est la baisse de la productivité du PSA. Cette diminution de la productivité est due à deux causes additionnelles. On peut noter en premier que l'augmentation des quantités de gaz riche en constituants peu adsorbables, ici en hydrogène, récupérées au cours des étapes d'équilibrage se fait au détriment des quantités de gaz alimentant l'étape d'élution à basse pression. Ainsi, au fur et à mesure que le nombre d'étapes d'équilibrage augmente, la qualité de la régénération se détériore, c'est-à-dire que l'on va laisser de plus en plus d'impuretés dans les adsorbeurs, ce qui a pour effet immédiat de diminuer la quantité de gaz d'alimentation qu'on pourra traiter par phase d'adsorption.

A débit de gaz de charge et à temps de phase fixés, cela va avoir pour conséquence d'augmenter sensiblement le volume des adsorbeurs, et donc le coût d'investissement du PSA.

On notera qu'au-delà d'un certain nombre d'étapes d'équilibrage, quand les quantités de gaz riche en constituants peu adsorbables, en hydrogène dans le cas d'un PSA H2, alimentant l'étape d'élution deviennent trop faibles, la qualité de la régénération finie par devenir insuffisante et le rendement du PSA commence à décroître. On définit généralement un « rapport d'élution » qui est la quantité en mètre cubes réels de gaz d'alimentation-élution divisée par celle de gaz de charge, et dont on estime que le minimum se situe le plus souvent autour de 1.1 ou 1.2, en particulier dans le cas de PSA H2.

L'autre effet négatif de l'augmentation du nombre d'équilibrages est que lors des dépressurisations à co-courant, les impuretés ont tendance à se désorber sous l'effet de la baisse de pression et à être entraînées par le flux gazeux en circulation vers la tête de l'adsorbeur, c'est-à-dire vers le côté production. Comme on veut bien récupérer le gaz le moins adsorbable, ici l'hydrogène, mais pas les impuretés, il convient de rajouter un volume d'adsorbant pour conserver ces constituants indésirables dans l'adsorbeur en dépressurisation.

Ces effets conjugués peuvent être très importants et conduire en définitive à installer dans une unité très performante en termes de rendement d'extraction, plusieurs fois le volume nécessaire à un PSA moins performant mais à un seul équilibrage.

Dans la pratique afin d'ajuster au mieux la quantité de gaz riche en constituants peu adsorbables échangée entre adsorbeurs, au cours des étapes d'équilibrage, il est possible d'interrompre certaines étapes d'équilibrage avant qu'il n'y ait équilibrage complet des pressions entre l'adsorbeur en dépressurisation à co-courant et l'adsorbeur en repressurisation à contre-courant. On parle alors d'équilibrage incomplet. Par ce biais, il est possible de régler plus précisément les performances du PSA, à savoir rendement et productivité. On peut dès lors définir le nombre réel théorique d'équilibrage, calculé à partir du nombre entier d'étapes d'équilibrage, multiplié par le ratio entre les quantités de gaz réellement échangées entre adsorbeurs et les quantités maximales qu'il serait possible d'échanger dans le cas d'équilibrages complets. Ainsi, une unité PSA H2 peut avoir les collecteurs et vannes pour effectuer 4 équilibrages successifs mais en pratique n'en effectuer que l'équivalent de 3.4 ou 3.7.

L'Homme de l'Art ayant pris rapidement conscience du surcoût important en investissement à payer en contrepartie du gain en efficacité que procuraient des équilibrages plus nombreux, a cherché d'autres solutions, parfois pour des applications bien particulières des PSA H2.

Une de ces solutions consiste à recycler une partie du résiduaire. Cette solution est particulièrement intéressante dès lorsque le gaz de charge du PSA H2 est très riche en hydrogène. Pour un gaz d'alimentation contenant par exemple 90% mole d'hydrogène, le résiduaire peut contenir quant à lui, plus de 70% mole d'hydrogène. Réintroduire une fraction de ce résiduaire dans l'alimentation du PSA va permettre d'augmenter sensiblement la production d'hydrogène, donc le rendement d'extraction par rapport au gaz de charge principal pour une augmentation relativement faible du volume d'adsorbant. US 6,315,818 décrit une solution de ce type. Lorsque le résiduaire est relativement pauvre en hydrogène, il a été proposé de traiter ce dernier dans une unité de perméation et d'utiliser la fraction riche en hydrogène issue de cette unité comme gaz d'appoint avec le même résultat que dans le cas précédent. Sauf configuration favorable, ces solutions demandent une unité de compression pour remonter le flux riche en hydrogène que l'on veut recycler jusqu'à la haute pression du PSA. Elles sont donc également coûteuses en investissement et en énergie.

Une autre famille de solution consiste à chasser les gaz les moins adsorbables de l'adsorbeur en introduisant immédiatement après le gaz de charge, un gaz très riche en constituants fortement adsorbables. Les gaz les moins adsorbables sont alors désorbés et poussés vers l'extrémité de tête permettant de produire ainsi une quantité complémentaire de ces gaz. Cette étape est généralement appelée "Rinse". Elle est couramment utilisée dans les PSA dont la production principale est le constituant le plus adsorbable. En éliminant de l'adsorbeur les constituants les plus légers, elle permet d'obtenir par décompression un fluide à une pureté plus élevée. Le gaz adsorbable utilisé pour cette étape de Rinse est généralement du gaz produit en basse pression. Si cette technique est utilisée surtout pour les PSA CO2 et certains PSA CO, des variantes ont pu être proposées pour des PSA H2.

En particulier, il a été proposé d'utiliser comme gaz de Rinse de l'azote, dans le cas où l'hydrogène est destiné à la synthèse de l'ammoniac, l'azote se retrouvant alors dans l'hydrogène n'étant pas gênant, ou du gaz naturel qui se retrouve ensuite dans le résiduaire et sert de gaz combustible. Cette solution consistant à rajouter une étape de Rinse après les étapes d'adsorption complexifie le cycle du PSA et conduit à rajouter généralement un adsorbeur. La quantité de gaz adsorbable à injecter est relativement importante si l'on veut chasser l'hydrogène d'une partie appréciable du volume d'adsorbant.

FR 2 836 060, quant à lui, cité à titre d'illustration des procédés utilisables dans le cas de PSA H2, décrit un cycle assez complexe qui dans certaines variantes combine à la fois un recyclage partiel du résiduaire et un appoint de gaz secondaire contenant de l'hydrogène. Le gaz de charge principal et les deux fractions additionnelles pouvant être introduites successivement dans l'unité en fonction de leur teneur respective en hydrogène, la plus pauvre en H2 en dernier, créant ainsi un effet de Rinse.

La encore, il est possible d'obtenir des rendements d'extraction en hydrogène élevé quand compté par rapport à la seule alimentation principale mais c'est au prix d'une grande complexité qui limite à des cas particuliers une telle solution.

Le but de la présente invention est donc ici de présenter un procédé permettant d'augmenter le rendement d'extraction en hydrogène d'un PSA H2 ou, à production fixée, d'augmenter sa productivité en ne mettant en jeu que des moyens très simples et peu onéreux.

Une solution de la présente invention est un procédé de production d'un flux gazeux présentant une concentration en hydrogène égale ou supérieure à 99,9% au moyen d'une unité d'adsorption à modulation de pression (PSA) mettant en œuvre au moins un adsorbeur comprenant un adsorbant ou un groupe d'adsorbants à partir d'un flux gazeux principal comprenant au moins 70% mole d'hydrogène, caractérisé en ce que l'on introduit dans ce flux gazeux principal, à l'amont du PSA, un flux secondaire :
- comprenant des constituants suffisamment adsorbables sur l'adsorbant pour déplacer l'hydrogène contenu dans l'adsorbant mais pas plus adsorbables vis-à-vis des matériaux adsorbants utilisés dans le PSA que les impuretés du mélange gazeux principal,
- représentant moins de 20% du débit molaire du flux gazeux principal et
- dont la teneur en hydrogène est inférieure à 25% mole.

Le domaine de l'invention se limite aux cas où le gaz d'alimentation du PSA est riche en hydrogène et où l'on veut produire de l'hydrogène pur. Ces deux éléments pris conjointement font qu'en fin d'étape d'adsorption, il reste une quantité importante d'hydrogène dans l'adsorbeur que ce soit l'hydrogène contenu dans les volumes inter et intra particulaire des zones saturées par les différentes impuretés ou l'hydrogène contenu dans la zone de tête de l'adsorbeur, en particulier dans la zone frontale. Compte tenu de la pureté recherchée, il est en effet impossible de faire avancer les impuretés trop avant dans l'adsorbeur et la dernière zone d'adsorbant ne contient que de l'hydrogène pratiquement pur.

Le but recherché ici n'est que de récupérer une fraction de l'hydrogène contenu, mettons en termes de rendement d'extraction, de gagner de 0.5 à 2% sans pour autant modifier sensiblement le dimensionnement du PSA effectué sur le seul mélange gazeux qui constitue son alimentation principale. Le flux additionnel que l'on va injecter dans le gaz de charge principal ne doit donc constituer qu'une petite fraction de ce dernier en termes de débit. De même, le but recherché n'est pas de traiter plus d'hydrogène mais d'introduire des constituants suffisamment adsorbables pour déplacer l'hydrogène contenu dans l'adsorbant au cours de l'étape d'adsorption. Pour que cela soit efficace mais ne conduise pas à augmenter le volume nécessaire d'adsorbant, il convient que ces constituants ne soient pas dilués par de l'hydrogène qui serait contenu dans le flux secondaire et donc que ce dernier en contienne moins de 25% mole et si possible beaucoup moins.

Il convient de noter la différence entre ce qui est proposé ici et les procédés mettant en œuvre un recyclage du résiduaire, préférentiellement de la fraction la plus riche en hydrogène ou l'adjonction au mélange principal d'une seconde alimentation riche en hydrogène. Dans ces derniers cas, le but recherché est d'augmenter la quantité d'hydrogène dans l'alimentation quitte à augmenter sensiblement le débit de gaz à traiter, pour produire plus à rendement d'extraction quasi constant.

Selon le principe de l'invention, on ne cherche pas à avoir plus d'hydrogène dans l'alimentation du PSA mais une quantité additionnelle d'impuretés bien choisies afin de récupérer un peu plus d'hydrogène.

Dans son mode de fonctionnement, l'invention s'apparente plus aux procédés PSA mettant en œuvre une étape de Rinse. On rappelle que dans le cas de Rinse, on introduit à la haute pression, pour un PSA de type PSA H2, une fois l'étape d'adsorption terminée, un gaz plus adsorbable que le gaz d'alimentation qui va pratiquement chasser en totalité l'hydrogène inter et intra particulaire. Pour avoir un effet suffisant, il convient dans ce cas d'introduire une quantité appréciable de gaz de Rinse, généralement plus de 30%, afin que les impuretés additionnelles saturent par exemple la moitié de l'adsorbant. Un tel procédé conduit, comme on l'a dit, à complexifier le PSA et à grossir la taille des adsorbeurs car les impuretés moyennement adsorbables, chassées en même temps que l'hydrogène par le gaz de Rinse doivent être adsorbées plus en aval dans l'adsorbeur. Ce procédé est très rarement utilisé sous cette forme dans les PSA H2 mais il est plus fréquent que lorsqu'on dispose de deux alimentations -ou plus - riches en hydrogène, on les introduit successivement dans les adsorbeurs, de la plus riche à la plus pauvre en hydrogène au lieu de les mélanger. Cette succession d'alimentation complique évidemment la gestion du PSA.

Par comparaison, dans le cadre de l'invention, on ne traite dans le PSA qu'un gaz d'alimentation, lui-même obtenu en ajoutant au mélange principal riche en hydrogène, un petit débit d'un gaz pauvre en hydrogène et contenant des impuretés adéquates. De la sorte, on n'a pas à modifier le cycle, à rajouter des étapes ou des équipements tels des collecteurs ou des vannes. En contre partie, les gains sur le rendement ne sont au mieux que de quelques points, sensiblement moins que ce que peuvent apporter recyclage ou équilibrages supplémentaires. Economiquement la solution proposée est par contre très intéressante car le gain, sensible dans le cas de gros PSA H2 car augmentant la production de centaines de Nm³/h, est obtenu à un coût très faible.

Suivant le cas, le procédé selon l'invention peut présenter l'une ou plusieurs des caractéristiques suivantes :
- le flux gazeux représente moins de 10% du débit molaire du flux gazeux principal et présente une teneur en hydrogène inférieure à 15% mole, encore préférentiellement inférieure à 5% mole.
- le flux secondaire présente une teneur en hydrogène inférieure à 1% mole. A quantité constante d'hydrogène en entrée du PSA, on "alourdit" donc simplement le mélange gazeux d'alimentation par des impuretés choisies.
- le PSA met en œuvre au moins un adsorbeur comprenant un adsorbant ou un groupe d'adsorbants et les constituants du flux secondaire ne sont pas plus adsorbables vis-à-vis de l'adsorbant ou du groupe d'adsorbants utilisés dans le PSA que les constituants du flux gazeux principal. Les constituants du flux secondaire ne sont pas plus adsorbables vis-à-vis des matériaux adsorbants utilisés dans le PSA que les constituants du mélange gazeux principal. Supposons par exemple que les impuretés dans le gaz principal soient de l'azote, du méthane et du CO2. On alourdira préférentiellement le gaz en méthane et/ou en CO2 plutôt par exemple qu'en hydrocarbures lourds qui risquent de s'adsorber trop fortement sur les adsorbants utilisés, mal se régénérer et conduire en définitive à l'inverse du résultat cherché.
- le flux gazeux principal a une teneur en hydrogène supérieure à 85% mole, préférentiellement supérieure à 90% mole. L'adsorbeur est dans ce cas rempli d'hydrogène en fin d'étape d'adsorption et alourdir le gaz de charge peut permettre d'en récupérer une fraction supplémentaire à bon compte. La solution proposée est alors à comparer à des solutions de type recyclage d'une partie du résiduaire ou à l'utilisation d'un maximum d'étapes d'équilibrage. Si l'on cherche un gain limité sur le débit de production d'hydrogène ou à minimiser l'investissement, la solution proposée ici peut être la plus avantageuse.
- le flux secondaire est constitué à plus de 50% mole de méthane, préférentiellement à plus de 90% mole de méthane. Le méthane est un constituant qui s'adsorbe moyennement, c'est-à-dire que sur le charbon actif par exemple, il s'adsorbe moins que le CO2 ou l'éthane mais plus que le monoxyde de carbone ou l'azote, ces constituants étant avec l'eau, les impuretés les plus classiques des alimentations des PSA H2. Il s'adsorbe également de façon réversible sur la plupart des zéolites. Le méthane va pouvoir s'adsorber par exemple sur le charbon actif sans gêner pratiquement l'adsorption du CO2 mais en chassant l'hydrogène. La phase gazeuse est également appauvrie en hydrogène du fait de la présence de méthane.
- le flux secondaire est constitué à plus de 50% mole de CO2, préférentiellement à plus de 90% mole de CO2. Ceci s'applique particulièrement aux PSA H2 traitant un mélange gazeux principal contenant quelques pourcents de CO2, par exemple de 1 à 5% mole. Il est habituel dans ce cas d'arrêter la quasi-totalité de ce CO2 sur du charbon actif. Comme précédemment, cet adsorbant va renfermer une certaine quantité d'hydrogène que ce soit sous forme adsorbée ou sous forme de gaz interstitiel. Augmenter la teneur en CO2 dans l'alimentation ne modifie quasiment pas le volume d'adsorbant à mettre en jeu, mais comme déjà expliqué précédemment ce CO2 complémentaire va chasser de l'hydrogène et permettre d'en récupérer un peu plus en phase d'adsorption.
- le flux secondaire est constitué à plus de 50% mole d'un mélange de CO2 et méthane, préférentiellement à plus de 90% mole d'un mélange de CO2 et de méthane. Un mélange comprenant ces deux gaz en quantité importante peut être plus facile à trouver sur site qu'un gaz essentiellement constitué de méthane ou de dioxyde de carbone. Son efficacité comme flux complémentaire peut être aussi, voire plus, efficace qu'un flux comprenant essentiellement l'un ou l'autre de ces constituants.
- le flux gazeux principal est un flux issu d'une unité de séparation cryogénique, en particulier d'une unité de séparation hydrogène-monoxyde de carbone ou d'une unité de condensation partielle de gaz de raffinerie.
- ladite unité de séparation cryogénique hydrogène-monoxyde de carbone comprend un lavage au méthane.
- le flux secondaire est essentiellement du méthane, préférentiellement prélevé sur la boucle de lavage au méthane. Cela peut être également un flux résiduaire issu de l'unité cryogénique de séparation ou du Gaz naturel. D'autres unités cryogéniques produisent une fraction gazeuse riche en hydrogène (de pureté supérieure à 85% mole généralement) à partir d'un mélange initial comprenant divers hydrocarbures, de l'hydrogène et éventuellement des gaz inertes de type azote ou argon. On parle alors souvent dans ce cas de gaz de raffinerie ou de pétrochimie. La totalité ou une fraction seulement du flux enrichi en hydrogène, obtenu souvent par simples condensations partielles successives du gaz d'alimentation jusqu'à atteindre des températures généralement comprises entre -130 et -180°C, est souvent épurée d'une partie des impuretés résiduelles (Ar, N2, CH4...) dans un PSA afin de produire de l'hydrogène à une pureté supérieure à 99.9% mole. Un flux secondaire riche en méthane peut être alors utilisé pour améliorer le rendement.
- le flux gazeux principal est un gaz de synthèse, en particulier un gaz issu d'une étape de reformage à la vapeur.
- le flux secondaire comprend plus de 50% mole de méthane et est du gaz naturel et/ou préférentiellement un gaz issu d'une étape de pré-reformage dudit gaz naturel.
- le débit de flux secondaire est régulé en fonction du débit du flux gazeux principal et/ou en fonction de la teneur d'un constituant dans le flux gazeux principale ou dans le mélange flux gazeux principale et flux secondaire. Cela permet de maintenir un gaz de charge de teneur constante malgré des variations de débit.

L'invention va être maintenant explicitée au moyen de deux exemples portant sur des gaz relativement différents traités par des unités PSA fonctionnant sur des cycles également différents.

### Exemple 1

Dans le premier exemple, on considère une unité PSA qui produit de l'hydrogène de très haute pureté à partir d'un gaz résiduaire issu d'une unité de séparation cryogénique hydrogène-monoxyde de carbone dont la composition moyenne est 98.3%H2, 0.15%N2, 0.5%CO, 1%CH4, 0.05%CO2, à 22 bar et 40°C. La pression haute du cycle est 22 bars abs. La pression basse du cycle est 1.6 bar. Les spécifications du produit de tête sont au minimum 99.9% de H2 mais avec un maximum de 10ppm de CO, ce dernier constituant se trouvant être un poison pour le procédé aval utilisateur de l'hydrogène. L'adsorbeur est constitué à environ 20% de charbon actif et à 80% de tamis moléculaire.

On a accès à une source de CH4, disponible à une pression au moins égale à la pression du gaz de charge initial du PSA, source dont on vient mélanger une petite fraction avec le gaz de charge en entrée du PSA afin d'alourdir légèrement en méthane le gaz de charge du PSA H2.

Dans cet exemple, le débit de gaz résiduaire riche en hydrogène issu de l'unité de séparation cryogénique est fixé, de même que le débit de production d'hydrogène très haute pureté à fournir. Le rendement standard du PSA associé à ce débit de production est de 86.5% afin de satisfaire la demande. On cherche donc à minimiser le coût d'investissement du PSA tout en gardant un rendement hydrogène au moins égal à 86.5%. Le cycle choisi pour obtenir ce rendement est un cycle à deux équilibrages.

Dans un premier temps, on n'effectue pas de modification sur les étapes d'équilibrages, le cycle après addition du méthane restant identique au cycle de base déterminé sur la seule alimentation principale. Le tableau 1 ci-dessous présente les écarts de performance obtenus en fonction de la quantité de CH4 mélangée au gaz de charge. Le cas 1 correspond au cas de référence (où on ne rajoute pas de CH4 dans le gaz de charge), et pour lequel on a 86.5% de rendement. Le cas 2 correspond au cas où on rajoute 2% en débit molaire de CH4 dans le gaz de charge initial. Enfin le cas 3 correspond au cas où on rajoute 4% en débit molaire de CH4 dans le gaz de charge initial. On a fait apparaître ici dans le tableau ΔVads qui est l'augmentation de volume d'adsorbant du PSA nécessaire pour obtenir la pureté requise de l'hydrogène. En pratique, et en particulier pour le cas 2, il n'y aurait pas lieu de changer le dimensionnement du PSA, la régulation sur la pureté se chargeant de réduire d'une fraction de seconde la durée de l'étape d'adsorption, ce qui n'aurait pas d'effet secondaire sur la séparation. On met de la sorte en évidence un gain de rendement Δη lié à l'addition du méthane dans le gaz de charge initial. Notons également que l'évolution des performances (Δη / ΔVads) n'est pas linéaire en fonction de la quantité de méthane injecté. Cela vient du fait que pour les cas 1 et 2, c'est la spécification de 10ppm CO maximum qui est dimensionnante vis-à-vis de l'obtention de la pureté requise pour l'hydrogène. Dans le cas 3, l'azote qui s'adsorbe difficilement commence lui aussi à être repoussé hors de l'adsorbant et le méthane lui-même à sortir. C'est la contrainte liée à la spécification de 99.9% H2 minimum qui devient dimensionnante et commence à nécessiter une augmentation du volume des lits d'adsorbants, même si cette dernière est faible et a un effet quasiment négligeable sur l'investissement global de l'unité PSA.

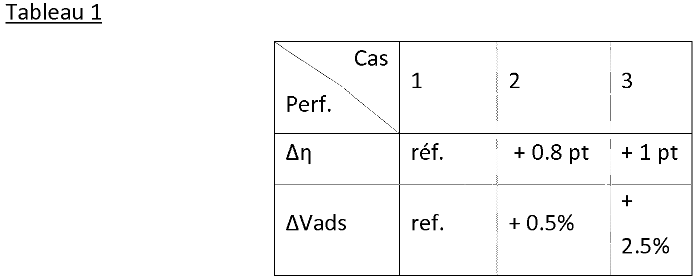

Le gain sur la production d'hydrogène, de l'ordre de 200 Nm3/h pour un PSA produisant 20 000 Nm3/h d'hydrogène, n'est pas négligeable mais ce n'est pas ici ce qui est recherché.

Aussi, dans un deuxième temps, on vient diminuer le nombre d'équilibrages pour chacun des cas 2 et 3, de façon à retrouver un rendement à 86.5% tout en gagnant cette fois en productivité. Les nouveaux écarts de performance obtenus par rapport au cas 1, sont présentés dans le tableau 2. On remarque que, pour un rendement donné de 86.5% (Δη=0), c'est-à-dire en fait pour une production d'hydrogène fixée, le fait d'ajouter du méthane dans le gaz de charge initial permet de gagner jusqu'à 22% de volume d'adsorbant à installer en moins (cf. évolution de ΔVads).

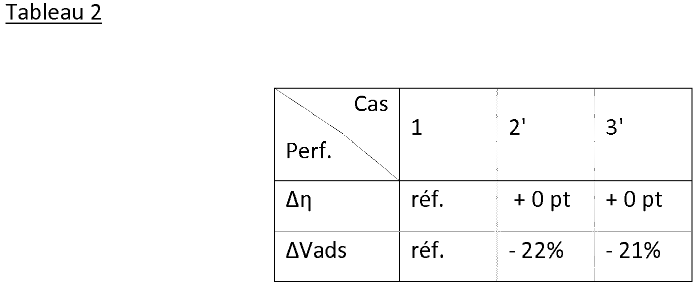

Un tel gain de productivité peut paraître surprenant car lié à une variation d'environ 1 point du rendement (voir Tableau 1) mais cela est dû en grande partie au fait que le rendement recherché est particulièrement élevé pour un gaz de ce type et que chaque point supplémentaire est difficile à obtenir. En raisonnant sur les pertes en hydrogène dans le résiduaire, on voit qu'en passant du cas 3 au cas 3', on s'autorise une perte H2 de 8% plus élevée (perte de 12.5% passant à 13.5 %), ce qui n'est plus négligeable vue sous cet angle.

Un tel effet peut être mis en évidence expérimentalement, en particulier sur une unité pilote, en traitant successivement des gaz de composition différente. Cela peut être une étape de validation avant l'application à une unité industrielle. Cependant, on voit que la quantité injectée doit être précise et correspond à une optimisation poussée. Le seul moyen vraiment industriel d'obtenir de tels résultats est d'utiliser des logiciels de simulation de procédés d'adsorption, adaptés aux PSA. De tels logiciels existent à présent dans le commerce et/ou ont été développés en interne par les compagnies travaillant dans le domaine de la séparation des gaz. Avec de tels outils, il est à présent possible de changer pas par pas la quantité de l'alimentation secondaire et de rechercher automatiquement un optimum sur des critères fixés au préalable par l'utilisateur.

Il aurait été ainsi possible de tester l'effet d'une injection de CO2 à la place ou en complément du méthane, sachant que le PSA est déjà prévu pour arrêter celui contenu dans l'alimentation principale. Néanmoins, sur le site envisagé, il n'y a pas de source disponible de CO2 sous pression suffisante et toute unité de compression, même pour un petit débit, rajoute un coût et une complexité qui n'est pas désirable. A l'inverse, il y a généralement une ou plusieurs sources de méthane, ou de gaz très riche en méthane (par exemple avec une teneur supérieure à 90% mole) disponible à haute pression. Parmi ces sources, on peut citer le gaz naturel qui est généralement une des matières premières utilisées dans les unités amont. Ce gaz naturel peut subir divers prétraitements destinés à lui enlever des impuretés éventuelles comme des produits soufrés, des traces de mercure, certains hydrocarbures non saturés, des composés cycliques...On prélèvera la fraction constituant l'alimentation secondaire à l'emplacement le plus adéquat, ordinairement après épuration.

Dans le cas précis de l'exemple 1, l'unité cryogénique de séparation H2/CO comporte un lavage au méthane. Le mélange alimentant la boîte froide, à savoir essentiellement de l'hydrogène et du monoxyde de carbone contenant également de l'ordre du pourcent ou de quelques pourcents de l'azote et du méthane est refroidi puis injecté en pied d'une colonne alimentée à sa tête par un débit de méthane liquide sous-refroidi. En descendant dans la colonne, garnie de plateaux ou de garnissage, le méthane liquéfie le CO, une grande partie de l'azote et le méthane de l'alimentation. La tête de la colonne est de l'hydrogène contenant le résiduel d'azote et de monoxyde de carbone ainsi que la quantité de méthane en équilibre avec la phase liquide qui est à ce niveau du méthane presque pur. Cette teneur est de l'ordre du pourcent et varie peu d'une unité de séparation à une autre, la température de tête de colonne étant d'environ -180°C pour que le lavage soit efficace tout en restant un peu en deçà du point de solidification du méthane. Le méthane de lavage tourne en rond dans l'unité - à l'aide d'une pompe qui le comprime liquide de la basse à la haute pression- avec une sortie via l'hydrogène produit (environ 1% de ce débit) et une entrée via le gaz d'alimentation. L'entrée étant très généralement supérieure à la sortie, on purge l'excédent de méthane normalement en basse pression. On propose ici d'utiliser le méthane du circuit de lavage après compression à la pression de lavage, comme appoint constituant l'alimentation secondaire. Ce flux est alors la bonne pression pour être injecté directement dans l'alimentation principale sans besoin de moyen complémentaire. Suivant l'organisation de la ligne d'échanges thermiques entre les fluides calorigènes et les fluides frigorigènes, l'appoint pourra être injecté à température cryogénique, par exemple sous forme de gouttelettes liquides dans la fraction de tête de la colonne de lavage ou alors après revaporisation à température ambiante. On pourrait concevoir de faire fonctionner la tête de la colonne de lavage à une température plus élevée afin d'avoir directement 2 ou 3% par exemple de méthane dans le flux hydrogène mais ceci se ferait sauf cas particulier au détriment de la récupération en CO alors que c'est la production principale de l'unité de séparation cryogénique, ou complexifierait la partie supérieure de la colonne de lavage.

D'après ces variantes, on voit que l'injection du flux secondaire dans le gaz d'alimentation principal peut ne pas se faire à l'entrée même du PSA H2 mais par exemple avant un échangeur de chaleur, un pot séparateur situés sur le circuit de l'alimentation principale. C'est le fait d'injecter volontairement un gaz correspondant aux caractéristiques revendiquées pour modifier la composition de l'alimentation du PSA qui importe en non la position exacte de l'injection qui peut en particulier se faire plus en amont si le procédé s'y prête.

### Exemple 2

Le second exemple est celui d'une unité PSA qui produit de l'hydrogène très haute pureté à partir d'un gaz de synthèse lui-même déjà riche en hydrogène, mais dont on souhaite extraire certaines impuretés en quantité trop importante comme le N₂, le CO, le CH₄ et le CO₂. Dans ce cas, il pourra être également intéressant, selon la composition du gaz de synthèse, d'augmenter la quantité de CH4 dans le gaz de charge. En effet :
- Le CH₄ se co-adsorbe bien avec le CO₂ sur le charbon actif, et se co-adsorbe bien avec le CO et le N₂ sur le tamis moléculaire. Il va donc prendre la place de l'hydrogène sur le charbon actif et sur le tamis moléculaire, en ne se substituant que faiblement au CO2, CO et N2 que l'on souhaite arrêter sur ces lits. Il convient de noter que ce phénomène qui fait qu'il n'y a finalement peu d'interactions entre adsorbats (CO2, CH4 ou CO, N2, CH4) est limité à des plages de composition ou plus exactement de pression partielle des différents constituants. Une très grosse teneur en méthane correspondant à plusieurs bars de pression partielle aurait comme conséquence dans ce cas de gêner sérieusement l'adsorption de CO par exemple. On voit que l'optimisation va être une question de dosage des compositions.
- La spécification en CH₄ dans le produit de tête est souvent relativement souple. Le méthane est rarement l'impureté qui dimensionne le PSA. Dans de nombreux cas, on pourra donc augmenter sa teneur dans le gaz d'alimentation sans craindre de chute brutale de la productivité tout en prenant en compte la remarque du paragraphe précédent. La principale contrainte réside généralement sur la teneur en CO qui est un poison pour de nombreux catalyseurs, en particulier des catalyseurs d'hydrogénation. Pour de l'hydrogène « commercial », on trouve typiquement des spécifications requérant au minimum 99.9% de H2 et au maximum 10 ppm de CO.

De même, il pourra être intéressant d'augmenter la teneur en CO2 dans le gaz de charge. En effet, en augmentant la teneur de CO2, on diminue la quantité de H2 co-adsorbé sur le charbon actif ce qui permet de réduire les pertes H2 lors de la régénération.

De façon générale, en fonction de la nouvelle composition du gaz de charge après adjonction de certains composés, il peut être nécessaire d'adapter la répartition des adsorbants, voire d'ajouter une couche d'un nouvel adsorbant. Typiquement, si l'on ajoute des hydrocarbures légers, allant de l'éthylène au pentane, dans le gaz de charge d'un PSA, il est alors nécessaire d'installer une couche de gel de silice dédié à leur arrêt, en amont de la couche de charbon actif. De même, si on augmente sensiblement la teneur en CO₂ dans le gaz de charge du PSA, il faut alors augmenter les proportions de charbon actif nécessaire à son arrêt.

Plus précisément, on considère ici une unité PSA qui produit de l'hydrogène à partir d'un gaz de synthèse issu de reformage à la vapeur dont la composition est 73.5%H2, 0.5%N2, 3%CO, 6.5%CH4, 16%CO2, à 25 bar et 40°C. La pression haute du cycle est 25 bars. La pression basse du cycle est 1.6 bar. Les spécifications du produit de tête sont au minimum 99.9% de H2 avec au maximum 100ppm de N2 et 10ppm de CO. L'adsorbeur est constitué à 60% de charbon actif et à 40% de tamis moléculaire. Le lit de charbon actif est dimensionné pour arrêter le CO2, tandis que le lit de tamis moléculaire est dimensionné pour arrêter le CO, le N2 et le CH4 non arrêté sur le charbon actif, aux spécifications requises.

Dans cet exemple, on cherche à valoriser au maximum le rendement hydrogène, de façon à produire le plus possible d'hydrogène à la pureté requise pour un débit de gaz de synthèse à l'entrée donné. On choisi donc un cycle possédant quatre étapes d'équilibrage...

Comme précédemment, on suppose que l'on a accès à une source de CH4, par exemple du gaz naturel, disponible à une pression au moins égale à la pression du gaz de charge initial du PSA, ce qui est très généralement le cas car il s'agit de la matière première du gaz de synthèse ; On injecte une fraction de ce flux secondaire dans le gaz de charge principal du PSA afin d'en changer légèrement la composition en l'enrichissant en CH4.

Le tableau 3 ci-dessous présente les écarts de performance en termes de rendement d'extraction d'hydrogène (Δη) et de volume additionnel d'adsorbant à installer (ΔVads) obtenus en fonction de la quantité de CH4 mélangée au gaz de charge. Le cas 1 correspond au cas de référence, où on ne rajoute pas de CH4 dans le gaz de charge. Le cas 2 correspond au cas où on rajoute 2% en débit molaire de CH4 dans le gaz de charge initial. Enfin le cas 3 correspond au cas où on rajoute 4% en débit molaire de CH4 dans le gaz de charge initial.

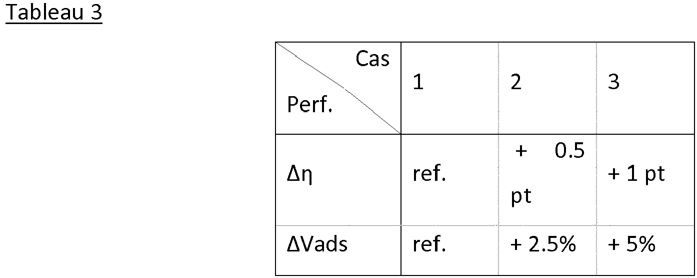

On remarque que l'ajout de méthane dans le gaz de purge permet des gains significatifs en rendement, tandis que l'augmentation du volume d'adsorbants nécessaire pour traiter le nouveau gaz de charge reste relativement faible. Dans le cas 3, on gagne ainsi 1 point de rendement, pour un volume d'adsorbants installé seulement 5% plus élevé. Notons que cette augmentation de volume prend compte à la fois du changement de composition du gaz de charge et de son augmentation de débit.

Pour chacun des trois cas simulés, le dimensionnement du lit de tamis moléculaire a été contraint par la spécification de 100 ppm en N2. Il n'y a pas eu de changement de l'impureté dimensionnante entre le cas 1, le cas 2 et le cas 3. Cela explique probablement en partie l'évolution quasi-linéaire des performances en fonction de la quantité de méthane ajoutée contrairement au cas de l'exemple 1.

L'injection de méthane a été privilégiée par rapport à celle du CO2, non seulement car cette première fraction est disponible sous pression mais parce que une telle fraction de gaz naturel aurait été injecté de toute façon dans le résiduaire Basse Pression du PSA H2 afin d'en augmenter le pouvoir calorifique, ce gaz résiduaire étant utilisé comme combustible au niveau du procédé de fabrication du gaz de synthèse.

Utilisé en tant que gaz de Rinse, c'est-à-dire après l'étape d'adsorption, un aussi faible débit de méthane (ou gaz naturel) n'aurait qu'un effet négligeable sur les performances du PSA, son effet se limitant à la zone d'entrée du PSA, tandis qu'en mélange, il permet de déplacer, certes moins d'hydrogène mais en pratique sur tout le volume et non sur une couche d'adsorbant très mince.

Dans les deux exemples précédents, il y a à la base un procédé de synthèse à partir de gaz naturel. Ce gaz naturel subit généralement divers prétraitement avant de passer dans le réacteur de synthèse proprement dit. Tout au long de ces traitements, il reste sous pression et pourra donc être prélevé à l'endroit le plus adéquat pour servir de flux secondaire au PSA H2.

D'autres gaz ou mélanges de gaz, s'ils sont disponibles, pourraient être utilisés à partir du moment où les simulations montrent l'intérêt d'un tel ajout. En pratique, on évitera les mélanges de gaz contenant des constituants trop difficiles à désorber. Une première approche consiste à ne pas utiliser un mélange contenant plusieurs pourcents d'un constituant qui serait plus adsorbable que les constituants déjà présents dans l'alimentation principale. On ne prend pas en compte l'eau qui peut être contenue dans le gaz de charge principal dans cette règle, car il s'agit d'un constituant à part très adsorbable sur beaucoup de matériaux et que l'on cherche à arrêter rapidement sur une première couche d'adsorbant qui lui est souvent dédiée.

Comme règle du pouce, on peut chercher à augmenter la teneur d'un constituant qui de part sa pression partielle dans l'alimentation principale et le choix des adsorbants se situe dans la zone de Henry, c'est-à-dire que sa capacité d'adsorption sur l'adsorbant retenu est alors pratiquement proportionnelle à sa teneur dans le gaz. Tant qu'on est dans cette zone, on n'a pas besoin en théorie de plus d'adsorbant pour arrêter la quantité supplémentaire d'impureté : si on augmente la quantité d'impureté par exemple de 15%, la capacité d'adsorption de cette impureté va croître aussi d'environ 15%.

Néanmoins, on a observé sur une unité industrielle de production d'hydrogène par PSA à partir d'un mélange H2, CO, CH4 et CO2 dans lequel la teneur en hydrogène était proche de 80% mole et la teneur en CO2 d'un peu plus de 10% que rajouter une quantité sensible de CO2 permettait là aussi de produire plus d'hydrogène, après simple réglage du PSA. Une simulation va dans le même sens mais les phénomènes entrant en jeu sont plus complexes. Le CO2 complémentaire chasse l'hydrogène du charbon actif mais aussi une partie du méthane qui voit sa teneur augmentée dans la seconde moitié de l'adsorbant, jouant lui aussi le rôle de déplaceur de l'hydrogène comme dans les exemples précédents.

A ce sujet, on peut penser que l'effet décrit serait moins sensible dans le cas d'un PSA multi couches d'adsorbants, c'est-à-dire mettant en jeu plus de 4 ou 5 couches successives d'adsorbants différents, chacune bien adaptée à un constituant particulier ou même à un intervalle de pression partielle donné et particulièrement sélective vis-à-vis de ce constituant. C'est une autre façon d'optimiser un PSA pour une alimentation bien fixée. L'inconvénient est que la multiplication des couches complique le remplissage, les diverses interfaces devant être bien horizontales pour ne pas créer de déséquilibres dans l'adsorbeur. Un tel agencement bien optimisé sur une composition peut être contre productif dès lors que la composition du gaz de charge peut varier en fonction des conditions opératoires des unités amont. Un constituant allant trop loin dans le PSA, c'est-à-dire dans une couche d'adsorbant non prévue pour celui-ci, peut être adsorbé trop fortement et difficile à régénérer. Dans le cadre de l'invention, on peut facilement prévoir une régulation de débit sur le flux secondaire de façon à conserver au cours du temps une même teneur dans l'alimentation globale, par exemple 10% mole de méthane, la teneur dans l'alimentation principale variant de 5 à 8% mole. Dans le cas de réacteur catalytique, de telles variations sont fréquentes et l'on donne souvent une composition en début d'exploitation (Begining of run) et une composition en fin d'exploitation (End of run) variant de plusieurs pourcents. Une injection contrôlée d'un flux secondaire peut permettre de rapprocher les deux compositions ou de choisir une composition plus favorable qu'il est alors possible d'obtenir ou tout du moins d'approcher en début et fin de vie du catalyseur.

On voit ainsi que le principe de l'invention, par son aspect régulation d'une composition globale, peut s'appliquer à des adsorbeurs comportant une pluralité de couches adsorbantes optimisées en fonction de l'évolution de la composition du gaz à l'intérieur de l'adsorbant.

L'invention se limite aux cas de PSA H2 dans lesquels on injecte un gaz contenant essentiellement des impuretés dans le but d'améliorer les performances, ce qui va à l'encontre de ce que semblerait indiquer le simple bon sens qui allait généralement vers l'alimentation la plus riche possible en hydrogène. Au-delà de ces applications, l'enseignement de ce développement est que pour un cycle PSA donné, et une alimentation type (c'est-à-dire issu d'un procédé connu et utilisé à maintes reprises comme des réacteurs de gaz de synthèse, des condensations partielles cryogéniques de gaz de raffinerie ou de mélange H2/CO,..), il existe des compositions plus ou moins favorables à la séparation envisagée. L'ajout d'une petite quantité d'un second gaz comme décrit dans le cadre de l'invention est la solution retenue ici mais il peut exister d'autres moyens de modifier légèrement la composition d'un gaz pour la rendre en définitive plus optimale vis-à-vis du PSA. La tendance sera alors de laisser plus d'impuretés dans le gaz que dans la pratique courante. Dans un procédé cryogénique dans lequel on obtient un gaz léger (hélium, hydrogène, monoxyde de carbone) par condensation partielle des autres constituants plus lourds -c'est-à-dire plus facilement condensables-, on pourra ainsi réchauffer de quelques degrés la température de la séparation gaz/liquide. De la sorte, le gaz obtenu contiendra davantage de constituants condensables, par exemple 6 à 8 %mole de méthane dans de l'hydrogène au lieu de viser 3 à 4%. De même, on peut régler le taux de conversion d'un réacteur catalytique par action sur la température de réaction, la composition de tête d'une colonne par action sur le reflux de ladite colonne. L'Homme de l'Art aura désormais à regarder si une simple modification du procédé amont, pouvant d'ailleurs conduire à un gain en investissement ou en énergie, n'entraîne pas un gain sur le PSA situé à l'aval.

De façon générale, cette invention peut s'appliquer à tout type de PSA H2, en particulier à des procédés mettant en œuvre N adsorbeurs ou N groupes d'adsorbeurs, N étant compris entre 2 et 24, dont M sont simultanément en phase d'adsorption, avec M compris entre1 et N-1 et comportant P équilibrages, P étant compris entre 0 et 5. Par groupe d'adsorbeurs, on entend des adsorbeurs travaillant parfaitement en parallèle. On peut par exemple utiliser 4 adsorbeurs en parallèle plutôt que de mettre en œuvre un adsorbeur de diamètre double. Il n'y a pas de limite théorique au nombre d'adsorbeurs d'un PSA. Les unités les plus importantes approchent des 20 adsorbeurs en service. Au-delà, il est probable qu'une bonne solution sera d'installer deux unités de taille 50%.

## Revendications

1. Procédé de production d'un flux gazeux présentant une concentration en hydrogène égale ou supérieure à 99,9% au moyen d'une unité d'adsorption à modulation de pression (PSA) mettant en œuvre au moins un adsorbeur comprenant un adsorbant ou un groupe d'adsorbants à partir d'un flux gazeux principal comprenant au moins 70% mole d'hydrogène, **caractérisé en ce que** l'on introduit dans ce flux gazeux principal, à l'amont du PSA, un flux secondaire :
- comprenant des constituants suffisamment adsorbables sur l'adsorbant pour déplacer l'hydrogène contenu dans l'adsorbant mais pas plus adsorbables vis-à-vis des matériaux adsorbants utilisés dans le PSA que les impuretés du mélange gazeux principal,
- représentant moins de 20% du débit molaire du flux gazeux principal et
- dont la teneur en hydrogène est inférieure à 25% mole.

2. Procédé selon la revendication, **caractérisé en ce que** le flux gazeux représente moins de 10% du débit molaire du flux gazeux principal et présente une teneur en hydrogène inférieure à 15% mole, encore préférentiellement inférieure à 5% mole.

3. Procédé selon l'une des revendications 1 ou 2, **caractérisé en ce que** le flux secondaire présente une teneur en hydrogène inférieure à 1% mole.

4. Procédé selon une des revendications précédentes **caractérisé en ce que** le flux gazeux principal a une teneur en hydrogène supérieure à 85% mole, préférentiellement supérieure à 90% mole.

5. Procédé selon une des revendications précédentes **caractérisé en ce que** le flux secondaire est constitué à plus de 50% mole de méthane, préférentiellement à plus de 90% mole de méthane.

6. Procédé selon l'une des revendications 1 à 4, **caractérisé en ce que** le flux secondaire est constitué à plus de 50% mole de CO2, préférentiellement à plus de 90% mole de CO2.

7. Procédé selon une des revendications 1 à 4, **caractérisé en ce que** le flux secondaire est constitué à plus de 50% mole d'un mélange de CO2 et méthane, préférentiellement à plus de 90% mole d'un mélange de CO2 et de méthane.

8. Procédé selon une des revendications précédentes, **caractérisé en ce que** le flux gazeux principal est un flux issu d'une unité de séparation cryogénique, en particulier d'une unité de séparation hydrogène-monoxyde de carbone ou d'une unité de condensation partielle de gaz de raffinerie.

9. Procédé selon la revendication 8, **caractérisé en ce que** ladite unité de séparation cryogénique hydrogène-monoxyde de carbone comprend un lavage au méthane.

10. Procédé de production d'hydrogène selon la revendication 9, **caractérisé en ce que** le flux secondaire est essentiellement du méthane, préférentiellement prélevé sur la boucle de lavage au méthane.

11. Procédé selon l'une des revendications 1 à 7, **caractérisé en ce que** le flux gazeux principal est un gaz de synthèse, en particulier un gaz issu d'une étape de reformage à la vapeur.

12. Procédé de production d'hydrogène selon la revendication 11, **caractérisé en ce que** le flux secondaire comprend plus de 50% mole de méthane et est du gaz naturel et/ou préférentiellement un gaz issu d'une étape de pré-reformage dudit gaz naturel.

13. Procédé selon l'une quelconque des revendications précédentes **caractérisé en ce que** le débit de flux secondaire est régulé en fonction du débit du flux gazeux principal et/ou en fonction de la teneur d'un constituant dans le flux gazeux principale ou dans le mélange flux gazeux principale et flux secondaire.

## Patentansprüche

1. Verfahren zur Erzeugung eines Gasstroms, eine Wasserstoffkonzentration gleich oder mehr als 99,9 % aufweisend, mittels einer Druckwechseladsorptionseinheit (PSA) unter Verwendung mindestens eines Adsorbers, der ein Adsorptionsmittel oder eine Gruppe von Adsorptionsmitteln umfasst, aus einem Hauptgasstrom, der mindestens 70 Mol-% Wasserstoff umfasst, **dadurch gekennzeichnet, dass** in diesen Hauptgasstrom stromaufwärts der PSA ein Sekundärstrom eingeführt wird:
- umfassend Bestandteile, die ausreichend auf dem Adsorptionsmittel adsorbierbar sind, um den im Adsorptionsmittel enthaltenen Wasserstoff zu verdrängen, aber nicht mehr an den in der PSA verwendeten Adsorptionsmaterialien adsorbierbar sind als die Verunreinigungen des Hauptgasgemischs,
- weniger als 20 % des molaren Durchsatzes des Hauptgasstroms darstellend, und
- dessen Wasserstoffgehalt weniger als 25 Mol-% aufweist.

2. Verfahren nach Anspruch, **dadurch gekennzeichnet, dass** der Gasstrom weniger als 10 % des molaren Durchsatzes des Hauptgasstroms darstellt und einen Wasserstoffgehalt von weniger als 15 Mol-%, noch bevorzugt weniger als 5 Mol-% aufweist.

3. Verfahren nach einem der Ansprüche 1 oder 2, **dadurch gekennzeichnet, dass** der Sekundärstrom einen Wasserstoffgehalt von weniger als 1 Mol-% aufweist.

4. Verfahren nach einem der vorstehenden Ansprüche, **dadurch gekennzeichnet, dass** der Hauptgasstrom einen Wasserstoffgehalt von mehr als 85 Mol-%, bevorzugt mehr als 90 Mol-% aufweist.

5. Verfahren nach einem der vorstehenden Ansprüche, **dadurch gekennzeichnet, dass** der Sekundärstrom aus mehr als 50 Mol-% Methan, bevorzugt aus mehr als 90 Mol-% Methan besteht.

6. Verfahren nach einem der Ansprüche 1 bis 4, **dadurch gekennzeichnet, dass** der Sekundärstrom aus mehr als 50 Mol-% CO2, bevorzugt aus mehr als 90 Mol-% CO2 besteht.

7. Verfahren nach einem der Ansprüche 1 bis 4, **dadurch gekennzeichnet, dass** der Sekundärstrom aus mehr als 50 Mol-% aus einem Gemisch aus CO2 und Methan, bevorzugt aus mehr als 90 Mol-% aus einem Gemisch aus CO2 und Methan besteht.

8. Verfahren nach einem der vorstehenden Ansprüche, **dadurch gekennzeichnet, dass** der Hauptgasstrom ein Strom aus einer kryogenen Zerlegungseinheit, insbesondere einer Wasserstoff/Kohlenmonoxid-Zerlegungseinheit oder einer Raffineriegas-Teilkondensationseinheit ist.

9. Verfahren nach Anspruch 8, **dadurch gekennzeichnet, dass** die kryogene Wasserstoff/Kohlenmonoxid-Zerlegungseinheit einen Methan-Wäscher umfasst.

10. Verfahren zur Erzeugung von Wasserstoff nach Anspruch 9, **dadurch gekennzeichnet, dass** der Sekundärstrom im Wesentlichen Methan ist, bevorzugt aus dem Methan-Waschkreislauf entnommen.

11. Verfahren nach einem der Ansprüche 1 bis 7, **dadurch gekennzeichnet, dass** der Hauptgasstrom ein Synthesegas ist, insbesondere ein Gas aus einem Dampfreformierungsschritt.

12. Verfahren zur Erzeugung von Wasserstoff nach Anspruch 11, **dadurch gekennzeichnet, dass** der Sekundärstrom mehr als 50 Mol-% Methan umfasst, und Erdgas und/oder bevorzugt ein Gas aus einem Vorreformierungsschritt des Erdgases ist.

13. Verfahren nach einem der vorstehenden Ansprüche, **dadurch gekennzeichnet, dass** der Sekundärstromdurchsatz in Abhängigkeit von dem Durchsatz des Hauptgasstroms und/oder in Abhängigkeit vom Gehalt eines Bestandteils im Hauptgasstrom oder im Gemisch aus Hauptgasstrom und Sekundärstrom reguliert wird.

## Claims

1. Method for producing a gaseous flow having a hydrogen concentration equal to or greater than 99.9% by means of a pressure modulation adsorption (PSA) unit using at least one adsorber comprising an adsorbent or a group of adsorbents from a main gaseous stream comprising at least 70% molar hydrogen, **characterised in that**, in this main gaseous stream, upstream of the PSA, a secondary stream is introduced:
- comprising constituents that are sufficiently adsorbable on the adsorbent to displace the hydrogen contained in the adsorbent but not more adsorbable vis-à-vis the adsorbent materials used in the PSA than the impurities of the main gaseous mixture,
- representing less than 20% of the molar flow of the main gaseous stream, and
- the hydrogen content of which is less than 25% molar.

2. Method according to claim, **characterised in that** the gaseous stream represents less than 10% of the molar flow of the main gaseous stream and has a hydrogen content of less than 15% molar, even more preferentially less than 5% molar.

3. Method according to either of claims 1 or 2, **characterised in that** the secondary stream has a hydrogen content of less than 1% molar.

4. Method according to one of the preceding claims, **characterised in that** the main gaseous stream has a hydrogen content of more than 85% molar, preferentially more than 90% molar.

5. Method according to one of the preceding claims, **characterised in that** the secondary stream consists of more than 50% molar methane, preferentially more than 90% molar methane.

6. Method according to one of claims 1 to 4, **characterised in that** the secondary stream consists of more than 50% molar CO₂, preferentially more than 90% molar CO₂.

7. Method according to one of claims 1 to 4, **characterised in that** the secondary stream consists of more than 50% molar of a mixture of CO₂ and methane, preferentially more than 90% molar of a mixture of CO₂ and methane.

8. Method according to one of the preceding claims, **characterised in that** the main gaseous stream is a stream issuing from a cryogenic separation unit, in particular from a hydrogen/carbon monoxide separation unit or a unit for the partial condensation of refinery gas.

9. Method according to claim 8, **characterised in that** said hydrogen/carbon monoxide cryogenic separation unit comprises washing with methane.

10. Hydrogen production method according to claim 9, **characterised in that** the secondary stream is essentially methane, preferentially taken from the methane washing loop.

11. Method according to one of claims 1 to 7, **characterised in that** the main gaseous stream is a synthesis gas, in particular a gas issuing from a steam reforming step.

12. Hydrogen production method according to claim 11, **characterised in that** the secondary stream comprises more than 50% molar methane and is natural gas and/or preferentially a gas issuing from a step of pre-reforming of said natural gas.

13. Method according to any of the preceding claims, **characterised in that** the flow of secondary stream is regulated according to the flow of the main gaseous stream and/or according to the proportion of a constituent in the main gaseous stream or in the mixture of main gaseous stream and secondary stream.
